# EUROPEAN PATENT SPECIFICATION

(11) **EP 0 842 601 B1**
(45) Date of publication and mention of the grant of the patent: **09.05.2001**
(21) Application number: 97203297.3
(22) Date of filing: 24.10.1997
(51) Int. Cl.: A01K 31/16, E04B 1/58

(54) **Poultry house construction**
Geflügelstallkonstruktion
Construction d'étable pour volaille

(30) Priority: 24.10.1996 NL 1004354
(43) Date of publication of application: 20.05.1998
(73) Proprietor: Jansen Holding B.V., 3771 NC Barneveld (NL)
(72) Inventor: Schwagermann, Leendert Quirinius, 3791 VE Achterveld (NL)
(74) Representative: Van den Heuvel, Henricus Theodorus

(56) References cited:
- EP-A- 0 008 713
- FR-A- 1 195 816
- FR-A- 2 546 953
- US-A- 2 181 495
- US-A- 3 124 102
- US-A- 3 315 995

## Description

The invention relates to a poultry house construction comprising at least one frame part and one contra-frame part adapted for co-acting with the frame part.

House constructions for poultry are understood to mean inter alia: frames for supporting laying nests, battery systems, systems for group accommodation, etc. Such constructions are usually manufactured, in particular welded, in components by a manufacturing company, which components are then transported to a poultry farm where they are assembled for instance by means of bolting or riveting, pop riveting or screwing.

US-A-3.315.995 discloses a construction in which a C-shaped beam is connected to a column by welding a bracket to the column such that the bracket forms a beam seat to engage the inner surfaces of the upper portion of the C-shaped beam. The upper part of the beam forms a hook member engaging in a recess in the bracket (contra-frame part). This known construction still requires weldment of different parts, which is time-consuming. Moreover, when the C-shaped beam is connected to the bracket, the beam can still be moved longitudinally. Also the construction lacks stability in the longitudinal sense, i.e. in the direction of the C-shaped beam.

US-A-3.124.102, on which the preamble of claim 1 is based, discloses a support structure for laying nests, in which a plurality of support stands, on which nest housings are mounted, are mounted to vertical standards. The different frame parts are connected by weldment to other elements. The assembly of this known support construction will require a considerable time.

The present invention has for its object to provide improved components with which a poultry house construction can be manufactured in a relative, simple and fast manner. The poultry house construction is of a quality at least comparable to that of the existing house constructions for poultry and can be manufactured with a comparatively limited number of frame parts, wherein additional strength in the elements are not necessary, or less so, and wherein stability of the construction can be improved. It is also an object of the invention to provide improved components (frame parts and contra-frame parts) which can be interconnected without any additional connecting means like bolting, riveting, pop riveting, screwing, welding, bending, etc. and which can be disassembled in a fast and efficient way, whenever needed.

According to the invention the object is achieved by the invention wherein the poultry house construction is characterized in that the frame part is provided with at least one hook member for engaging on the contra-frame part, the frame part is provided at a distance from the hook member with at least one supporting edge for supporting against the contra-frame part adapted for co-action with the hook member and wherein the contra-frame part is provided with an edge part for co-action with the hook member and a supporting surface located at a distance from the edge part for co-action with the supporting edge.

Using such a (contra-frame part) frame part, one or more (frame parts) contra-frame parts for instance can be mutually coupled until the resulting construction has the required stiffness.

In a preferred embodiment the contra-frame part is a post and these posts are mutually coupled using frame parts according to the invention.

Using these frame parts and contra-frame parts a house construction can be assembled in very simple manner without special tools being required for the purpose. Assembly can take place in an exceptionally short time. Fewer components are also required, whereby the risk of erroneous assembly or waiting time to replace possibly missing components will occur less. The logistics of transporting a house construction to a poultry farm are also simplified. Assembly of the individual frame parts into larger components at the manufacturing location by welding these frame parts into sub-assemblies would be a less likely choice. The components for transporting can hereby be of smaller construction when use is made of frame parts and contra-frame parts according to the invention. The house construction can be assembled immediately from these smaller frame parts at the poultry farm. With this method the total labour time required for assembly of the house construction from the separate components will also be reduced. Yet another advantage is chat a house construction assembled from frame parts and contra-frame parts according to the invention is simple to disassemble. Finally, it is also possible to utilize the modular structure of such a house construction when for instance a part of the house construction is damaged or when a part of the house construction has to be modernized.

Another preferred embodiment of the frame part comprises hook members for clamping a contra-frame part therebetween, wherein the hookmembers are directed in substantially the same direction. A possible embodiment thereof comprises at least two hook members located in the same plane for engaging a plate-like contra-frame part. Using these embodiments with hook members it is possible to fix a frame part to a contra-frame part without an opening having to be present in the contra-frame part for this purpose or there being an upper edge onto which the frame part can engage. Plate-like objects for instance, such as cover plates, planks etc., can thus be coupled to a frame part in simple manner. Structural elements of for instance laying nests can thus form part of the frame, whereby the functionality of the frame is enhanced considerably. This results in a considerably simpler construction of a frame with laying nests, as the two can be integrated.

The present invention provides a house construction for poultry which incorporates at least one frame part and one contra-frame part according to the invention. It will be apparent here that a significant proportion of the above stated advantages can also be realized when some of the frame parts of a house construction are fixed rigidly to each other by for instance welding, riveting etc., and other frame and contra-frame parts are hooked to each other. Depending on the situation an optimum can be chosen for this purpose.

The present invention moreover provides a profile part for supporting laying nests in a house construction for poultry, which profile part is provided with:
- a longitudinally running external surface for supporting at least one laying nest, and
- a groove-like longitudinally running edge located at a distance from the supporting surface for co-action with a coupling edge of slats.
In a preferred embodiment such a profile part can also be provided with a protruding hook member for engaging on a contra-frame part. Finally, the invention provides a house construction which incorporates such a profile part. The profile part combines two functions which heretofore were fulfilled by separate profile parts. The number of construction elements in a house construction for supporting laying nests can hereby be reduced, which has a cost-saving effect.

The present invention will be further elucidated with reference to the non-limitative embodiments shown in the following figures. Herein:
figure 1 shows a cut-away perspective view of a house construction for supporting laying nests in which profile parts according to the invention are incorporated, figure 2 shows a cut-away perspective view of the profile part as incorporated in the construction shown in figure 1,
figure 3 is a perspective view of a coupling of two frame parts to a contra-frame part according to the invention,
figure 4 shows a perspective view of a partly cut-away commune system which incorporates frame parts and contra-frame parts according to the invention, and
figure 5 is a perspective view of a part of a frame part according to the invention as incorporated in the commune system shown in figure 4.

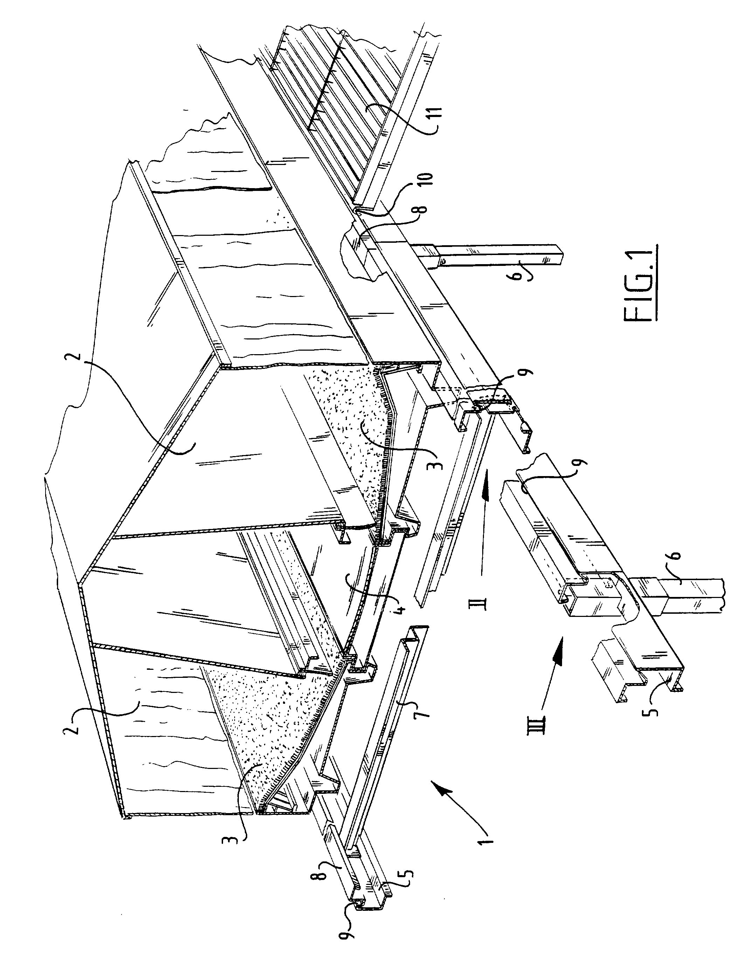

Figure 1 shows a house construction 1 for supporting laying nests 2. These laying nests 2 are constructed such that chickens preferably lay their eggs in laying nests 2, whereafter the laid eggs roll via a sloping floor surface 3 to a conveyor belt 4. This conveyor belt 4 subsequently carries the eggs away for further processing. Laying nests 2 are placed some distance above the floor surface of the house. The house construction 1 supporting laying nests 2 comprises two parallel running profile parts 5. These latter are supported by posts 6 and mutually connected using girders 7. The profile parts 5 according to the invention are formed such that they comprise a supporting surface 8 and a groove-like edge 9 running parallel to this supporting surface 8. Laying nests 2 can be placed on the supporting surface 8 of profile parts 5. A coupling edge 10 of slats 11 can be hooked into the groove-like edge 9. As this figure shows, slats 11 then connect onto laying nests 2 whereby the poultry has easy access to laying nests 2. Slats 11 are formed such that they let through the poultry manure.

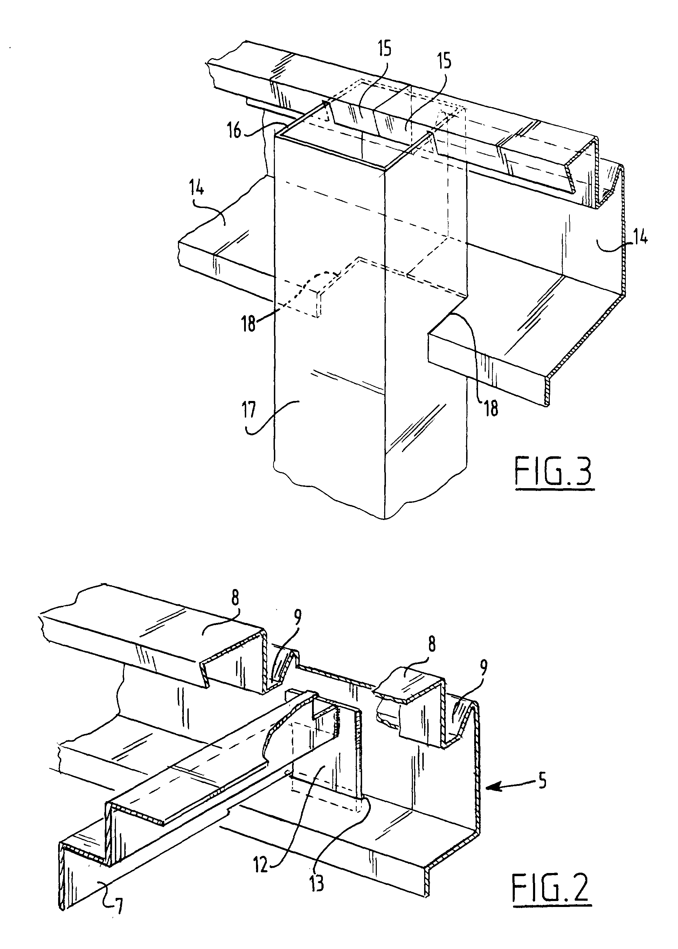

Figure 2 shows the profile part 5 in more detail. It can be seen here that girder 7 is provided with a hook-like element 12 which engages in a recess 13 arranged for this purpose in profile part 5. Also clearly shown are the supporting surfaces 8 and groove-like edge 9.

Figure 3 shows two lying frame parts 14 which both comprise a hook member 15 with which the frame parts 14 engage on an upper edge 16 of a contra-frame part 17. Fixing of frame parts 14 and contra-frame part 17 is very simple. The frame parts 14 have only to be hooked on the contra-frame part 17. At a distance from hook members 15 the frame parts 14 are both provided with a support edge 18 with which the frame parts support against contra-frame part 17. This provides the connection of frame parts 14 and contra-frame part 17 the required stability.

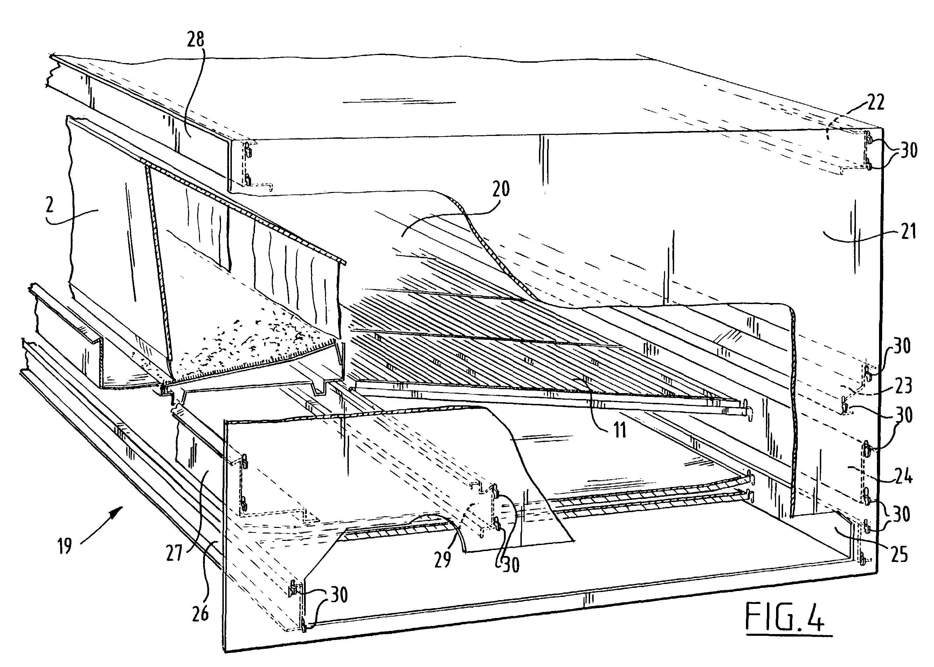

Figure 4 shows a commune system 19 in which a laying nest 2 is arranged. Also situated in commune system 19 are slats 11. This figure does not show that in the interior space of commune system 19 is situated a surface on which the poultry can forage. A commune system 19 combines the advantages of battery accommodation in respect of environmental and health aspects with the advantages of ground accommodation in respect of the welfare of the poultry. The poultry is accommodated in units 20, a part of which is formed by the slats 11 and a foraging part is also present. For instance 40 chickens and 4 roosters can be accommodated per unit 20. Side walls 21 of units 20 are mutually connected using a plurality of profile parts 22-29. These latter can herein also fulfil one or more other functions. Profile part 24 also forms for instance a support for slats 11. Profile parts 22-29 are provided on the end surfaces with protruding hook members 30 which co-act with recesses arranged for this purpose in side wall 21. Profile parts 22-29 can thus be coupled to side wall 21 in very simple manner.

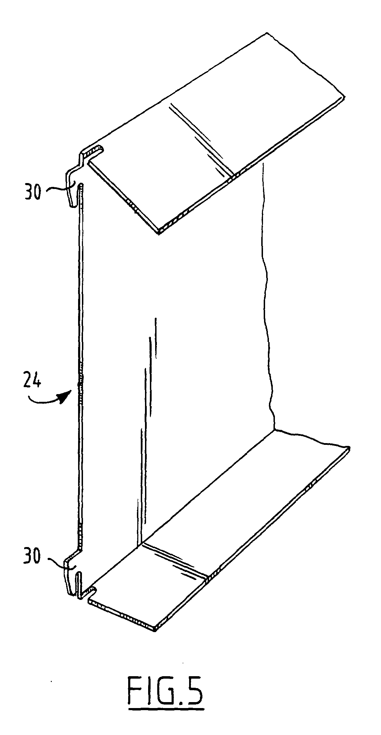

Finally, figure 5 shows in detail the profile part 24 as included in the commune system 19 shown in figure 4. The protruding hook members 30 are fixed on the end side surface of profile part 24.

## Claims

1. Poultry house construction (1) comprising a layer nest support frame for supporting a plurality of layer nests, which layer nest support frame includes at least one frame part (5,14;7;22-29) and one contra-frame part (17;5;21) adapted for co-acting with the frame-part, **characterized in that** the frame part (5,14;7;22-29) is provided with at least one hook member (15;12;30) for engaging on the contra-frame part (17;5;21), the frame part is provided at a distance from the hook member with at least one supporting edge (18) for supporting against the contra-frame part adapted for co-action with the hook member (15;12;30) and wherein the contra-frame part (17;5;21) is provided with an edge part (16) for co-action with the hook member (15,12,30) and a supporting surface located at a distance from the edge part for co-action with the supporting edge (18).

2. Poultry house construction as claimed in claim 1, wherein the frame part (22-29) comprises two protruding hook members (30) for clamping a contra-frame part (21) therebetween, wherein the hook members (30) are directed in substantially the same direction.

3. Poultry house construction as claimed in claim 1 or 2, wherein the frame part comprises at least two hook members (30) which are located in the same plane for engaging a plate-like contra-frame part (21).

4. Poultry house construction as claimed in claim 2 or 3, wherein the protruding hook members (30) are fixed on the end side surface of the frame part (22-29).

5. Poultry house construction as claimed in any of claims 2-4, wherein the contra-frame part (21) is a side wall provided with recesses for co-action with the hook members (30).

6. Poultry house construction according to claim 1, wherein the edge part of the contra-frame part (5) forms part of a recess (13) in the contra-frame part (5).

7. Poultry house construction as claimed in any of the preceding claims, wherein the contra-frame part is a substantially vertical upright post (17).

8. Poultry house construction as claimed in any of the preceding claims, wherein the frame part is a girder (14) for supporting a laying nest.

9. Poultry house construction according to any of the preceding claims, wherein the form of the supporting edge (18) of frame part (5,14) corresponds to the form of the external surface of the contra-frame part (17).

10. Poultry house construction (1) for poultry according to any of the preceding claims, wherein the hook member (15) of the frame part (5,14) comprises a notch for receiving the edge part (16) of contra-frame part (17)

11. Poultry house construction (1) for poultry according to any of the preceding claims, wherein the frame pare is a girder (7) for mutually connecting contra-frame parts (5;14).

12. Poultry house construction according to any of the preceding claims, wherein a profile part (5,14;7) is provided with:
- a longitudinally running external surface (8) for supporting at least one laying nest (2), and
- a groove-like longitudinally running edge (9) located at a distance from the supporting surface for co-action with a coupling edge (10) of slats (11).

## Patentansprüche

1. Geflügelstallkonstruktion (1) mit einem Legenesttragrahmen zum Tragen einer Anzahl von Legenestern, wobei der Legenesttragrahmen wenigstens einen Rahmenteil (5, 14; 7; 22-29) und ein Rahmenteil-Gegenstück (17; 5; 21) aufweist, das zum Zusammenwirken mit dem Rahmenteil ausgebildet ist, dadurch **gekennzeichnet,** daß der Rahmenteil (5, 14, 7, 22-29) mit wenigstens einem Hakenelement (15; 12; 30) zum Eingreifen in das Rahmenteil-Gegenstück (17; 5; 21) versehen ist, der Rahmenteil in einem Abstand zum Hakenelement mit wenigstens einer Tragkante (18) versehen ist, die sich gegen das Rahmenteil-Gegenstück, das zum Zusammenwirken mit dem Hakenelement (15; 12; 30) ausgebildet ist, abstützt, und wobei das Rahmenteil-Gegenstück (17; 5; 21) mit einem Kantenteil (16) versehen ist, der mit dem Hakenelement (15, 12, 30) zusammenwirkt, und in einem Abstand zum Kantenteil eine Tragfläche angeordnet ist, die mit der Tragkante (18) zusammenwirkt.

2. Geflügelstallkonstruktion nach Anspruch 1, wobei der Rahmenteil (22-29) zwei vorstehende Hakenelemente (30) aufweist, um dazwischen ein Rahmenteil-Gegenstück (21) zu klemmen, wobei die Hakenelemente (30) im wesentlichen in die gleiche Richtung ausgerichtet sind.

3. Geflügelstallkonstruktion nach Anspruch 1 oder 2, wobei der Rahmenteil wenigstens zwei Hakenelemente (30) aufweist, die in der gleichen Ebene angeordnet sind, um in ein plattenartiges Rahmenteilgegenstück (21) einzugreifen.

4. Geflügelstallkonstruktion nach Anspruch 2 oder 3, wobei die vorstehenden Hakenelemente (30) an der Seitenendfläche des Rahmenteils (22-29) befestigt sind.

5. Geflügelstallkonstruktion nach einem der Ansprüche 2 bis 4, wobei das Rahmenteilgegenstück (21) eine Seitenwand ist, die mit Aussparungen für das Zusammenwirken mit den Hakenelementen (30) versehen ist.

6. Geflügelstallkonstruktion nach Anspruch 1, wobei der Kantenteil des Rahmenteilgegenstückes (5) einen Teil einer Aussparung (13) in dem Rahmenteilgegenstück (5) bildet.

7. Geflügelstallkonstruktion nach einem der vorstehenden Ansprüche, wobei das Rahmenteilgegenstück ein im wesentlichen vertikaler, aufrechter Pfosten (17) ist.

8. Geflügelstallkonstruktion nach einem der vorstehenden Ansprüche, wobei der Rahmenteil ein Träger (14) zum Tragen eines Legenestes ist.

9. Geflügelstallkonstruktion nach einem der vorstehenden Ansprüche, wobei die Form der Tragkante (18) des Rahmenteils (5, 14) der Form der Außenfläche des Rahmenteil-Gegenstückes (17) entspricht.

10. Geflügelstallkonstruktion (1) für Geflügel nach einem der vorstehenden Ansprüche, wobei das Hakenelement (15) des Rahmenteils (5, 14) eine Kerbe zum Aufnehmen des Kantenteils (16) des Rahmenteil-Gegenstücks (17) aufweist.

11. Geflügelstallkonstruktion (1) für Geflügel nach einem der vorstehenden Ansprüche, wobei der Rahmenteil ein Träger (7) zur gegenseitigen Verbindung der Rahmenteil-Gegenstücke (5, 14) ist.

12. Geflügelstallkonstruktion nach einem der vorstehenden Ansprüche, wobei ein Profilteil (5, 14; 7) vorgesehen ist, mit:
- einer in Längsrichtung verlaufenden Außenfläche (8) zum Tragen von wenigstens einem Legenest (2), und
- einer nutartig in Längsrichtung verlaufenden Kante (9), die in einem Abstand zur Tragfläche angeordnet ist, um mit einer Kupplungskante (10) von Latten (11) zusammenzuwirken.

## Revendications

1. Construction formant poulailler (1) comprenant un cadre de support pour nids de ponte de manière à supporter une pluralité de nids de ponte, lequel cadre de support pour nids de ponte comprend au moins une partie formant cadre (5, 14 ; 7 ; 22 à 29) et une partie formant contre-cadre (17 ; 5 ; 21) adaptée pour agir conjointement avec la partie formant cadre, caractérisée en ce que la partie formant cadre (5, 14 ; 7 ; 22 à 29) est munie d'au moins un élément crochu (15; 12 ; 30) pour venir en prise sur la partie formant contre-cadre (17 ; 5 ; 21), la partie formant cadre est prévue à une certaine distance de l'élément crochu avec au moins un bord de support (18) destiné à s'appuyer contre la partie formant contre-cadre adaptée pour agir conjointement avec l'élément crochu (15; 12 ; 30) et où la partie formant contre-cadre (17 ; 5 ; 21) est munie d'une partie formant bord (16) pour agir conjointement avec l'élément crochu (15, 12, 30) et une surface de support placée à une certaine distance de la partie formant bord pour agir conjointement avec le bord de support (18).

2. Construction formant poulailler selon la revendication 1, dans laquelle la partie formant cadre (22 à 29) comprend deux éléments crochus saillants (30) pour serrer entre eux une partie formant contre-cadre (21), dans laquelle les éléments crochus (30) sont dirigés sensiblement dans la même direction.

3. Construction formant poulailler selon la revendication 1 ou 2, dans laquelle la partie formant cadre comprend au moins deux éléments crochus (30) qui sont situés dans le même plan pour venir en prise avec une partie formant contre-cadre (21) semblable à un plateau.

4. Construction formant poulailler selon la revendication 2 ou 3, dans laquelle les éléments crochus saillants (30) sont fixés sur la surface latérale d'extrémité de la partie formant cadre (22 à 29).

5. Construction formant poulailler selon l'une quelconque des revendications 2 à 4, dans laquelle la partie formant contre-cadre (21) est une paroi latérale munie de creux pour agir conjointement avec les éléments crochus (30).

6. Construction formant poulailler selon la revendication 1, dans laquelle la partie formant bord de la partie formant contre-cadre (5) forme une partie d'un creux (13) dans la partie formant contre-cadre (5).

7. Construction formant poulailler selon l'une quelconque des revendications précédentes, dans laquelle la partie formant contre-cadre est un montant droit (17) sensiblement vertical.

8. Construction formant poulailler selon l'une quelconque des revendications précédentes, dans laquelle la partie formant cadre est une poutrelle (14) destinée à supporter un nid de ponte.

9. Construction formant poulailler selon l'une quelconque des revendications précédentes, dans laquelle la forme du bord de support (18) de la partie formant cadre (5, 14) correspond à la forme de la surface extérieure de la partie formant contre-cadre (17).

10. Construction formant poulailler (1) destinée à de la volaille selon l'une quelconque des revendications précédentes, dans laquelle l'élément crochu (15) de la partie formant cadre (5, 14) comprend une encoche destinée à recevoir la partie formant bord (16) de la partie formant contre-cadre (17).

11. Construction formant poulailler (1) destinée à la volaille selon l'une quelconque des revendications précédentes, dans laquelle la partie formant cadre est une poutrelle (7) destinée à relier mutuellement les parties formant contre-cadre (5, 14).

12. Construction formant poulailler selon l'une quelconque des revendications précédentes, dans laquelle une partie profilée (5, 14 ; 7) est munie de :
- une surface extérieure (8) s'étendant longitudinalement pour supporter au moins un nid de ponte (2), et
- un bord (9) s'étendant longitudinalement en forme de gorge placé à une certaine distance de la surface de support pour agir conjointement avec un bord d'accouplement (10) de lattes (11).
